# FASCICULE DE BREVET EUROPEEN

(11) **EP 0 933 915 B1**
(45) Date de publication et mention de la délivrance du brevet: **25.08.2004**
(21) Numéro de dépôt: 99400134.5
(22) Date de dépôt: 21.01.1999
(51) Int. Cl.: H04M 3/56, H04M 1/72

(54) **Réseau local de téléphonie sans fil permettant l'établissement de conférences avec un réseau téléphonique et terminal d'un tel réseau local**
Lokales drahtloses Fernsprechnetz für Konferenzanrufaufbau mit einem Fernsprechnetz und Terminal für Gebrauch in solchem lokalem Netz
Local wireless telephone network allowing setting up of conference calls with a telephone network and terminal for use in such a local network

(30) Priorité: 23.01.1998 FR 9800708
(43) Date de publication de la demande: 04.08.1999
(73) Titulaire: SAGEM SA, 75116 Paris (FR)
(72) Inventeur: Frederic, Alain, 95610 Eragny sur Oise (FR)
(74) Mandataire: Bloch, Gérard

(56) Documents cités:
- WO-A-96/04744
- US-A- 5 191 593
- PATENT ABSTRACTS OF JAPAN vol. 095, no. 011, 26 décembre 1995 & JP 07 203541 A (CASIO COMPUT CO LTD), 4 août 1995
- PATENT ABSTRACTS OF JAPAN vol. 095, no. 002, 31 mars 1995 & JP 06 326779 A (TOSHIBA CORP;OTHERS: 01), 25 novembre 1994

## Description

Dans le domaine des communications téléphoniques, les utilisateurs des postes veulent maintenant pouvoir téléphoner ou être joints par téléphone alors qu'ils sont éloignés d'un téléphone fixe. De ce fait, outre les réseaux de radiotéléphonie mobile, sont apparus sur le marché des postes téléphoniques pour la domotique, comportant une base, raccordable, d'une part, à une ligne du réseau téléphonique commuté, et, d'autre part, par radio, à des combinés mobiles.

La base permet de relier l'un quelconque des combinés au réseau téléphonique et, sinon, elle offre une fonction d'interphonie pour ceux-ci, c'est-à-dire de "bus" ou réseau local radio, auquel plusieurs combinés peuvent se connecter deux à deux.

Or, avec un câblage classique, les postes sont physiquement, donc toujours, en parallèle et, lorsqu'un appel entrant arrive à l'improviste, plusieurs postes peuvent être décrochés pour y répondre et dialoguer avec l'appelant, quitte à raccrocher ensuite certains des postes, dont l'utilisateur n'est pas concerné par l'appel. On peut de même, en communication départ, établir une conférence à trois ou plus avec l'interlocuteur appelé à travers le réseau téléphonique.

Dans le cas du réseau local radio, la demanderesse a souhaité disposer aussi de la fonction conférence, ou interphonie, avec le réseau téléphonique externe. Un système comprenant une telle fonction est, par exemple décrit dans WO 96 04744 A.

C'est ainsi qu'elle propose son invention, qui concerne tout d'abord un terminal mobile de radiotéléphonie locale agencé pour être relié, par une liaison de réseau local sans fil, à une base de gestion du réseau local raccordée à une ligne de réseau téléphonique et agencée pour établir des communications simultanées entre divers combinés mobiles du réseau local, terminal caractérisé par le fait qu'il comporte :
- des moyens de liaison pour établir, à travers la base, une pluralité de liaisons simultanées avec la ligne téléphonique et plusieurs combinés et
- des moyens de traitement de signal agencés pour recevoir, desdits moyens de liaison, des signaux phoniques et pour engendrer et émettre en retour, sur chacune de ladite pluralité de liaisons, un signal de somme des signaux phoniques reçus des autres liaisons.

Ainsi, et bien que cette solution paraisse a priori peu rationnelle puisqu'elle entraîne un accroissement du nombre de liaisons radio, le terminal constitue une base déportée pour conférences et la ligne téléphonique est ainsi banalisée par rapport aux divers combinés, puisque la base de gestion du réseau ne sert alors que d'interface de liaison entre cette ligne et le terminal.

L'invention concerne aussi un réseau local de téléphonie sans fil comprenant un terminal , une base de gestion du réseau et au moins un combiné mobile classique.

L'invention sera mieux comprise à l'aide de la description suivante d'une forme de réalisation préférée, en référence au dessin annexé, sur lequel :
- la figure 1 représente un réseau local radiotéléphonie avec une base et un terminal selon l'invention, ainsi que des combinés téléphoniques classiques à liaison radio,
- la figure 2 illustre sous forme de matrice de connexion, les traitements de signaux phoniques effectués dans le terminal de l'invention,
- la figure 3 représente schématiquement le terminal de l'invention, et
- la figure 4 représente des trames temporelles du réseau radio.

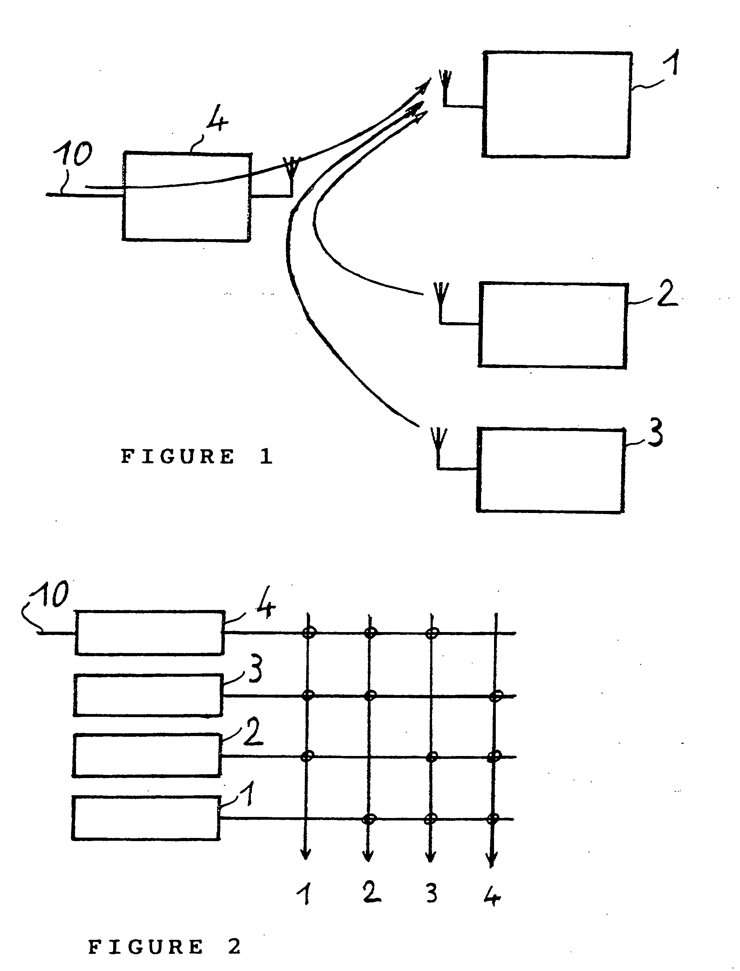

La figure 1 représente très schématiquement un réseau de radiotéléphonie local ici selon la norme DECT. Une base 4, reliée à une ligne 10 du réseau téléphonique commuté, gère ici des trames de douze voies temporelles bi-directionnelles permettant de relier à la base 4 autant de terminaux radio. Il n'est représenté ici que trois terminaux, à savoir le terminal 1 selon l'invention et deux autres terminaux, 2 et 3, qui sont des combinés téléphoniques radio classiques. Dans cet exemple, le terminal selon l'invention a aussi, en plus de sa fonction de traitement de signaux et de commutation exposée plus loin, les fonctions classiques de combiné téléphonique. C'est donc ici un combiné classique (2, 3) amélioré.

Comme l'illustrent les flèches de la figure 1, le terminal 1 est agencé pour recevoir, par des liaisons ou voies temporelles de la trame du réseau local, les signaux phoniques émis par les combinés 2 et 3 et ceux émis par un poste, externe, du réseau téléphonique 10. La référence 10 sert aussi, par la suite, à désigner ce poste. En outre, le combiné 1 engendre aussi des signaux phoniques produits par son utilisateur, si bien qu'il dispose donc de la totalité des signaux phoniques engendrés.

En émission, et en référence à la figure 2, le combiné 1 est agencé pour émettre, comme expliqué plus loin, vers chacun de ses correspondants 2, 3, 10, un signal phonique spécifique représentant la somme des signaux de tous les postes téléphoniques en conférence (1, 2, 3, 10), somme diminuée ici à chaque fois du signal phonique émis par le poste 1, 2, 3, 10 considéré, afin d'éviter qu'il ne doive lui-même effectuer un filtrage d'écho. Pour ce qui concerne le combiné 1 lui-même, le signal somme des signaux phoniques des postes 2, 3, 10 est évidemment exploité dans le combiné 1, c'est-à-dire émis vers le haut-parleur 12 de celui-ci, sans émission sur le réseau radio local.

La figure 2 représente une matrice carrée du combiné 1, comportant en entrée, lignes horizontales, les trois voies temporelles provenant des correspondants ou émetteurs 2, 3, 10, la dernière entrée, référencée 1 dans un but d'homogénéité, correspondant en fait à la sortie, locale, du microphone 11, émetteur local, du combiné 1.

En sortie, (verticales) sont représentées les voies retour des mêmes trois voies temporelles, ainsi que la commande (aussi référencée 1) du haut-parleur 12 du combiné 1. Les intersections, des verticales de sortie avec les horizontales d'entrée, qui comportent un point indiquent que le signal phonique d'entrée correspondant est pris en compte dans la somme de sortie considérée. Comme on le voit, la diagonale principale est exempte de tels points puisqu'on ne réémet pas, vers chacun des correspondants émetteurs, le signal émis par celui-ci, afin d'éviter un écho ou effet Larsen. En d'autres termes, cette matrice est une sorte de gyrateur qui reçoit N signaux de N postes téléphoniques et aiguille, vers chacune des N sorties, les N-1 signaux provenant des autres postes téléphoniques.

En exploitation, la base 4 perçoit les activations de plusieurs combinés comme 1, 2, 3 et établit une conférence avec la ligne réseau. Même en l'absence d'activité téléphonique spécifique au combiné 1, il assure cependant la fonction conférence pour les combinés classiques, qui n'ont donc pas besoin d'être modifiés : la fonction conférence est une fonction "centrale" d'un point de vue exploitation.

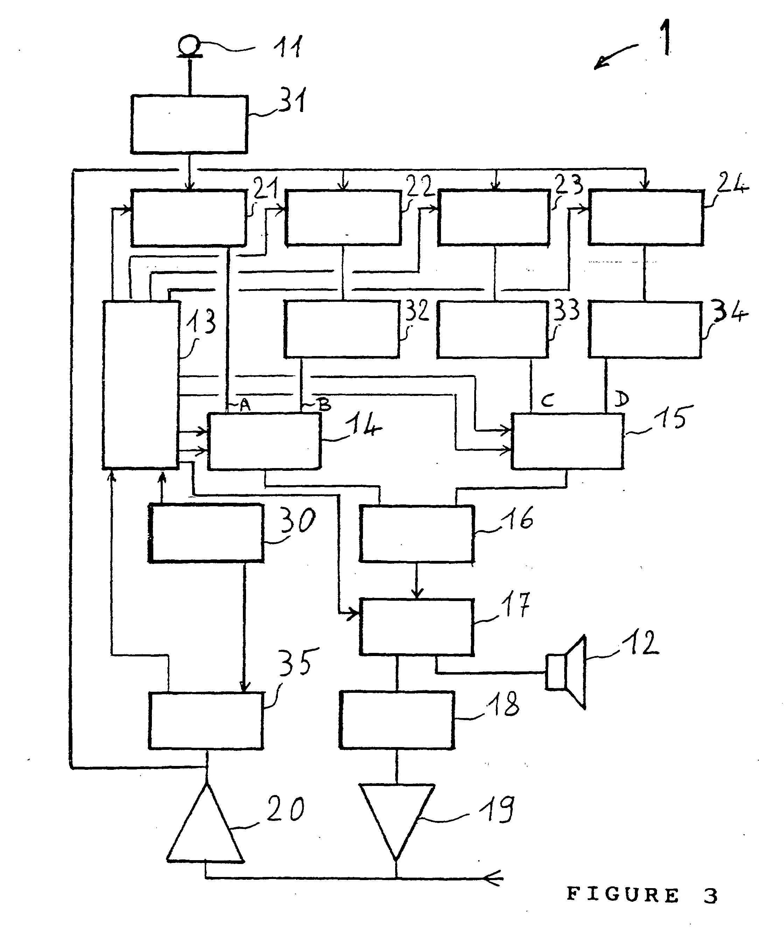

La figure 3 représente, sous forme de blocs fonctionnels, la constitution des circuits du combiné 1.

Celui-ci comporte un microprocesseur 35 qui gère entre autres les trames de voies temporelles du réseau local, c'est-à-dire qui gère les signalisations échangées avec la base 4 pour établir et rompre des communications avec, ou à travers, celle-ci, au moyen d'un émetteur radio 19 et d'un récepteur associé 20. Le microprocesseur 35 est agencé pour simuler, vis-à-vis de la base 4, plusieurs combinés comme 2 et 3, c'est-à-dire qu'il peut se voir affecter plusieurs voies temporelles bi-directionnelles. A cet effet, le terminal 1 est perçu par la base 4 comme étant plusieurs entités différentes, avec donc des identités différentes, et aucune modification de la base 4 n'est donc nécessaire.

Les références 21, 22, 23, 24 indiquent des mémoires pour signaux phoniques numérisés, respectivement reçus du microphone 11 à travers un convertisseur analogique/numérique 31, ici linéaire, et des trois correspondants 2, 3, 4, par trois voies temporelles. Une base de temps 30 alimente le microprocesseur 35 et un circuit séquenceur 13 commandé par ce dernier, circuit 13 qui commande cycliquement, en temps opportun, la mémorisation des données numériques dans les mémoires 21 à 24. Comme les mémoires 22, 23, 24 reçoivent des signaux ayant été codés ADPCM (Modulation, Adaptative par Différence, à Codage par Impulsions) pour leur transmission radio, elles sont suivies de circuits convertisseurs 32, 33, 34 respectifs qui mémorisent la succession des évolutions du signal considéré et peuvent ainsi fournir l'amplitude complète du signal, mise à jour à chaque réception d'un signal de différence ADPCM. L'utilisation d'un circuit 31 qui serait du type ADPCM impliquerait de même la présence d'un convertisseur comme 32, 33, 34 en sortie de mémoire 21. Cette linéarisation du codage permet d'effectuer ensuite des sommations, ici numériques, sur les divers signaux.

A cet effet, un bloc additionneur, à ici quatre voies, est constitué d'une arborescence de trois additionneurs (en fait additionneurs-soustracteurs) 14, 15, 16 à deux voies. L'additionneur 14 reçoit les sorties, référencées A et B, des circuits 21 et 32 et l'additionneur 15 reçoit les sorties C et D des circuits respectifs 33 et 34, tandis que l'additionneur 16, aval, effectue la somme des signaux provenant des additionneurs 14 et 15.

Le circuit séquenceur 13 commande le bloc additionneur 14 à 16 en partage de temps, donc ici avec N = 4 périodes à l'intérieur d'une trame DECT du réseau local. Plus précisément, le séquenceur 13 commande les additionneurs 14 et 15 en temps partagé pour que, à chacune des N = 4 périodes, l'un d'eux soit transparent pour l'une de ses entrées, A, B ; C, D, ce qui équivaut à forcer à 0 l'entrée associée, et donc à l'éliminer de l'addition. L'additionneur 14, 15 concerné fonctionne alors en multiplexeur à deux voies.

Ainsi, les additionneurs 14 et 15 fournissent successivement :
0 + B et C + D
A + 0 et C + D
A + B et 0 + D
A + B et C + 0

L'additionneur 16 fournit ainsi le signal somme de N-1 entrées, avec une entrée à zéro "tournante", selon la fonction gyrateur exposée ci-dessus.

En variante, il pourrait être prévu que l'élimination tournante d'une entrée A, B, C, D soit effectuée par N - 1 multiplexeurs, alimentant un bloc additionneur à N - 1 entrées. Plus précisément ici, l'additionneur 15 disparaîtrait et les trois entrées libres d'addition subsistantes (deux pour l'additionneur 14 et une pour l'additionneur 16) seraient alimentées à travers trois multiplexeurs à deux voies respectifs, reliés respectivement aux mémoires 21, 22 et 22, 23 ainsi que 23, 24, permettant ainsi d'alimenter toujours l'entrée d'addition correspondante, tout en rejetant de façon tournante l'un des quatre signaux provenant des mémoires 21 à 24.

Pour la clarté de l'exposé, et bien que l'addition de "0" soit fictive, on continuera à le faire apparaître cependant dans les formules, pour indiquer la position du signal non pris en compte dans chaque somme partielle.

L'additionneur 16 fournit cycliquement le signal somme des signaux (22, 23, 24) reçus des autres postes (2, 3, 4) au haut-parleur 12, à travers un démultiplexeur 17 commandé par le circuit séquenceur 13. Pendant les N-1 voies temporelles réservées à l'émission vers les autres postes 2, 3, 4 (et donc 10), le démultiplexeur 17 alimente un codeur ADPCM 18, synchronisé par le circuit séquenceur 13 pour émettre les sommes :
A + 0 + C + D
A + B + 0 + D
A + B + C + 0
vers les postes 2, 3, 4 respectifs, à travers un émetteur radio 19.

Le terminal 1 constitue ainsi une base déportée à fonctionnalité accrue puisqu'il se substitue à la base 4 pour établir une conférence incluant la ligne 10. Comme indiqué au début, le terminal 1 constitue aussi une base centrale du réseau local, la base 4 servant simplement d'interface relais pour le relier aux divers autres correspondants reliés à la base 4 par radio (2, 3) ou par fil (10). La base 4 n'a ainsi à gérer, de façon classique, qu'une pluralité de communications locales séparées. Le combiné 1 peut avoir sa propre activité téléphonique, comme ici, ou n'être simplement qu'un terminal de mise à niveau technique de la base 4, pour la conférence.

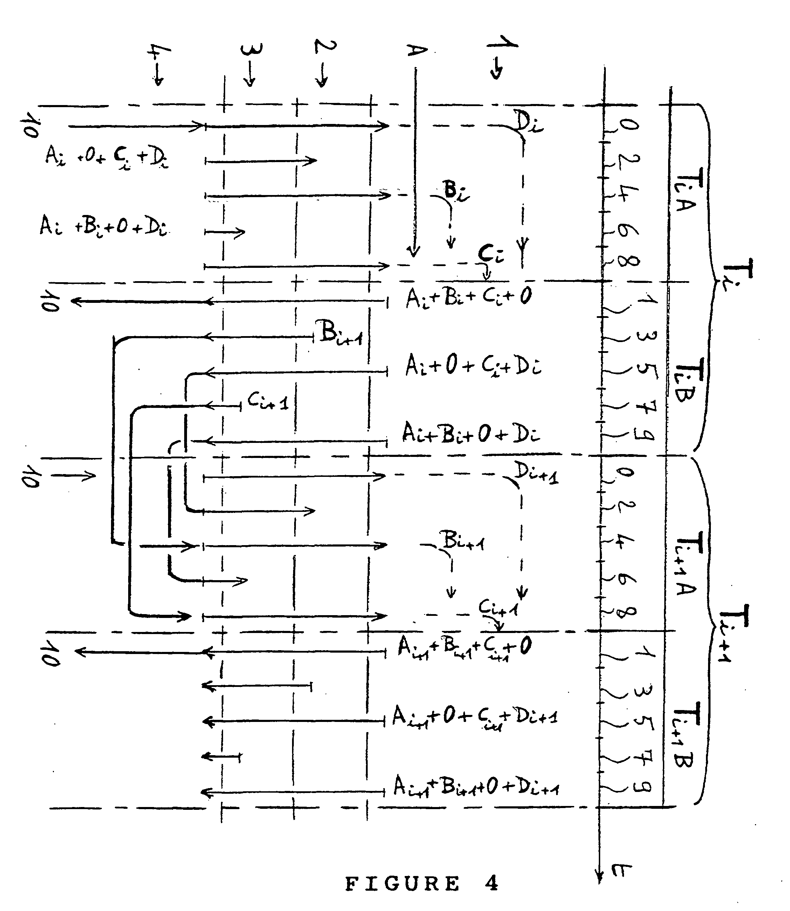

Le chronogramme de la figure 4 illustre, les échanges de signaux entre les N postes, le temps t étant en abcisse et les postes 1, 2, 3, 4 étant en ordonnées. Il y est représenté deux trames temporelles successives Tᵢ, Tᵢ₊₁, chacune comportant 12 voies temporelles en émission base 4 vers les combinés comme 1, 2, 3, référencées TᵢA, Tᵢ₊₁A, suivies d'autant de voies temporelles TᵢB, Tᵢ₊₁B dans l'autre sens. Par souci de clarté, on n'a représenté ici que celles qui sont utilisées, c'est-à-dire N-1+ N-2 = 5 voies dans chaque sens, de rangs arbitrairement pairs en émission (TᵢA) et impairs en réception (TᵢB).

Dans la trame émission TᵢA de la base 4, celle-ci émet, dans les voies temporelles de rangs ici 0, 4, 8, les signaux respectifs provenant de la ligne 10, du combiné 2 et du combiné 3. Les voies 2 et 6 servent à alimenter les combinés 2 et 3 par les signaux respectifs Aᵢ + 0 + Cᵢ + Dᵢ et Aᵢ + Bᵢ + 0 + Dᵢ. La façon selon laquelle ces signaux ont été émis est expliquée plus loin.

Ces réceptions par le combiné 1 correspondent aux flèches de la figure 1. Le microphone local 11 du combiné 1 fournit de même localement un signal phonique Aᵢ dans le combiné 1.

Dans la trame retour TᵢB, le combiné 1 émet vers la base 4 les trois sommes :
Aᵢ + Bᵢ + Cᵢ + 0
Aᵢ + Bᵢ + 0 + Dᵢ
Aᵢ + 0 + Cᵢ + Dᵢ
dans les voies temporelles 1, 5, 9, à destination respectivement de la ligne 10, du combiné 3 et du combiné 2.

Dans les voies temporelles retour 3 et 7 de la trame TᵢB attribuées aux terminaux 2 et 3, ceux-ci émettent vers la base 4 leurs propres signaux phoniques Bᵢ₊₁ et Cᵢ₊₁ et alimentent ainsi la base 4 pour la trame émission suivante Tᵢ₊₁A, semblable à la trame TᵢA indiquée plus haut.

Ainsi, la base 4 collecte les signaux phoniques des postes (2, 3, 10) autres que le combiné 1 et lui transmet ces signaux. La trame Tᵢ₊₁ reproduit le séquencement de la trame Tᵢ.

On conçoit qu'il suffit d'accroître la taille du bloc de calcul (14 à 16) pour augmenter N. Un fonctionnement "statique" de ce bloc, avec des additionneurs affectés spécifiquement aux diverses voies n'est pas non plus à exclure.

## Revendications

1. Terminal mobile de radiotéléphonie locale (1) agencé pour être relié, par une liaison de réseau local sans fil, à une base (4) de gestion du réseau local raccordée à une ligne de réseau téléphonique (10) et agencée pour établir des communications simultanées entre divers combinés mobiles (2, 3) du réseau local, terminal **caractérisé par le fait qu'**il comporte :
- des moyens de liaison (19, 20, 35) agencés pour établir, à travers la base (4), une pluralité de liaisons simultanées avec la ligne téléphonique (10) et plusieurs combinés (2, 3) et
- des moyens de traitement de signal (14 - 17) agencés pour recevoir, desdits moyens de liaison (19, 20, 35), des signaux phoniques et pour engendrer et émettre en retour, sur chacune de ladite pluralité de liaisons, un signal de somme des signaux phoniques reçus des autres liaisons.

2. Terminal selon la revendication 1, dans lequel les moyens de traitement de signal (14 - 17) sont agencés pour additionner, aux signaux spécifiques émis, un signal phonique engendré (11) par le terminal.

3. Terminal selon l'une des revendications 1 et 2, dans lequel les moyens de traitement de signal (14 - 17) sont agencés pour calculer un signal de somme totale des signaux phoniques reçus et pour l'appliquer à un haut-parleur (12).

4. Terminal selon l'une des revendications 1 à 3, dans lequel les moyens de traitement de signal (14 - 17) sont reliés en entrée à des moyens (32, 33, 34) de linéarisation des signaux phoniques reçus.

5. Terminal selon l'une des revendications 1 à 4, dans lequel les moyens de traitement de signal comportent un bloc de calcul (14 - 17) agencé pour, en partage de temps, additionner les divers signaux phoniques en éliminant cycliquement de l'addition, sous la commande de moyens séquenceurs (13), l'un desdits signaux.

6. Terminal selon la revendication 5, dans lequel les moyens de traitement de signal (14 - 17) comportent des additionneurs à deux voies agencés pour cycliquement fonctionner en multiplexeur d'élimination d'un des signaux phoniques.

7. Terminal selon la revendication 3 avec l'une des revendications 5 et 6, dans lequel les moyens de traitement (14 - 17) comportent des moyens d'aiguillage (17) agencés pour alternativement aiguiller le signal somme totale vers le haut-parleur (12) et aiguiller les autres signaux de somme vers un émetteur radio (19) de liaison avec la base (4).

8. Réseau local de téléphonie sans fil comprenant un terminal selon l'une des revendications 1 à 7, une base (4) de gestion du réseau et au moins un combiné mobile classique (2 ; 3).

## Patentansprüche

1. Mobiles Endgerät für lokalen Sprechfunkverkehr (1), das dazu eingerichtet ist, über eine lokale drahtlose Netzverbindung mit einer Verwaltungsbasis (4) für das lokale Netz verbunden zu sein, die an eine Telefonnetzleitung (10) angeschlossen und dazu eingerichtet ist, gleichzeitige Verbindungen zwischen verschiedenen mobilen Handapparaten (2, 3) des lokalen Netzes herzustellen, wobei das Endgerät
**dadurch gekennzeichnet,**
**ist, dass** es folgendes umfasst:
- Verbindungseinrichtungen (19, 20, 35), die dazu eingerichtet sind, über die Basis (4) eine Vielzahl gleichzeitiger Verbindungen mit der Telefonleitung (10) und mehreren Handapparaten (2, 3) herzustellen, und
- Signalverarbeitungseinrichtungen (14 - 17), die dazu eingerichtet sind, von den Verbindungseinrichtungen (19, 20, 35) Schallsignale zu empfangen, und ein Summensignal der von den anderen Verbindungen empfangenen Schallsignale zu erzeugen und über jede der Vielzahl von Verbindungen zurückzusenden.

2. Endgerät nach Anspruch 1,
wobei die Signalverarbeitungseinrichtungen (14 - 17) dazu eingerichtet sind, zu den speziellen abgegebenen Signalen ein vom Endgerät erzeugtes Schallsignal (11) zu addieren.

3. Endgerät nach einem der Ansprüche 1 und 2,
wobei die Signalverarbeitungseinrichtungen (14 - 17) dazu eingerichtet sind, ein Gesamtsummensignal der empfangenen Schallsignale zu berechnen und dieses an einen Lautsprecher (12) anzulegen.

4. Endgerät nach einem der Ansprüche 1 bis 3,
wobei die Signalverarbeitungseinrichtungen (14 - 17) am Eingang mit Einrichtungen (32, 33, 34) zur Linearisierung der empfangenen Schallsignale verbunden sind.

5. Endgerät nach einem der Ansprüche 1 bis 4,
wobei die Signalverarbeitungseinrichtungen einen Rechenblock (14 - 17) umfassen, der dazu eingerichtet ist, im Timesharingbetrieb die verschiedenen Schallsignale zu addieren, indem unter der Steuerung von Befehlsgebern (13), zyklisch eines dieser Signale aus der Addition entfernt wird.

6. Endgerät nach Anspruch 5,
wobei die Signalverarbeitungseinrichtungen (14 - 17) Zweiwegaddierer umfassen, die dazu eingerichtet sind, zyklisch als Multiplexer zur Beseitigung eines der Schallsignale zu arbeiten.

7. Endgerät nach Anspruch 3 mit einem der Ansprüche 5 und 6,
wobei die Bearbeitungseinrichtungen (14 - 17) Verzweigungseinrichtungen (17) umfassen, die dazu eingerichtet sind, das Gesamtsummensignal abwechselnd zum Lautsprecher (12) und die anderen Summensignale zu einem Funksender (19) zur Verbindung mit der Basis (4) zu leiten.

8. Lokales drahtloses Telefonnetz,
das ein Endgerät nach einem der Ansprüche 1 bis 7, eine Verwaltungsbasis (4) für das Netz und mindestens einen herkömmlichen mobilen Handapparat (2; 3) umfasst.

## Claims

1. Local radiotelephone mobile terminal (1), arranged to be connected, via a local wireless network link, to a base (4) for managing the local network, said base being connected to a telephone network line (10) and arranged to establish simultaneous communications between various mobile handsets (2, 3) of the local network, said terminal being **characterised in that** it comprises:
- linking means (19, 20, 35) arranged to establish, via the base (4), a plurality of simultaneous links with the telephone line (10) and a plurality of handsets (2, 3), and
- signal processing means (14-17) arranged to receive acoustic signals from said linking means (19, 20, 35), and to generate and transmit in return, on each of said plurality of links, a signal representing the sum of the acoustic signals received from the other links.

2. Terminal according to claim 1, wherein the signal processing means (14-17) are arranged to add, to the specific signals transmitted, an acoustic signal generated (11) by the terminal.

3. Terminal according to one of claims 1 and 2, wherein the signal processing means (14-17) are arranged to calculate a signal representing the total sum of the received acoustic signals and to apply it to a loud-speaker (12).

4. Terminal according to one of claims 1 to 3, wherein the signal processing means (14-17) are connected in input to means (32, 33, 34) for linearization of the received acoustic signals.

5. Terminal according to one of claims 1 to 4, wherein the signal processing means include an arithmetic unit (14-17) arranged to add the various acoustic signals, on a time-sharing basis, eliminating cyclically one of said signals from the addition, under the control of sequencer means (13).

6. Terminal according to claim 5, wherein the signal processing means (14-17) include two-channel adders arranged to function cyclically as multiplexers for eliminating one of the acoustic signals.

7. Terminal according to claim 3 with one of claims 5 and 6, wherein the signal processing means (14-17) include switching means (17) arranged to alternately switch the signal representing the total sum to the loudspeaker (12) and switch the other sum signals to a radio transmitter (19) linked to the base (4).

8. Local wireless telephone network comprising a terminal according to one of claims 1 to 7, a base (4) for managing the network and at least one standard mobile handset (2; 3).
